# DEMANDE DE BREVET EUROPEEN

(11) **EP 1 669 922 A1**
(43) Date de publication de la demande: **14.06.2006**
(21) Numéro de dépôt: 05292623.5
(22) Date de dépôt: 08.12.2005
(51) Int. Cl.: G06Q 30/00, G06Q 10/00

(54) **Système et procédé de contrôle qualité d'applications d'entreprise**

(30) Priorité: 10.12.2004 FR 0413172
(71) Demandeur: France Telecom S.A., 75015 Paris (FR)
(72) Inventeur: Hoffenberg, Jean, 78170 La Celle St Cloud (FR)

(57) **Abrégé**

Système et procédé de contrôle qualité d'un ensemble d'applications informatisées d'entreprise.

Selon l'invention, ledit système comprend au moins un dispositif intégrateur (10) apte à traiter au moins une donnée correspondant à chacun des utilisateurs desdites applications informatisées et à définir automatiquement au moins une table de références utilisateur pour relier toutes les données correspondant à chacun desdits utilisateurs, au moins un gestionnaire (13) de questionnaires apte à gérer automatiquement toutes les questions et toutes les réponses correspondant auxdites applications informatisées de l'entreprise à contrôler, au moins un dispositif (14) de calcul apte à calculer automatiquement au moins un indicateur de qualité et au moins un axe d'analyse à partir des réponses à au moins un questionnaire pour donner au moins un indice de satisfaction, au moins un entrepôt (15) de données apte à analyser en dynamique les réponses définies directement par lesdits utilisateurs, au moins un moteur (16) de catégorisation apte à attribuer automatiquement une signature de référence à chacune desdites questions ouvertes pour représenter une catégorie de réponse, au moins un moteur (17) de modélisation apte à générer automatiquement au moins une variable explicative pour expliquer ledit indice de satisfaction des utilisateurs interrogés pour ladite application informatisée contrôlée.

Application à l'interrogation des utilisateurs d'un ensemble d'applications informatisées mises à disposition dans une entreprise pour en détecter les dysfonctionnements, en mesurer les performances et l'adéquation par rapport aux besoins des utilisateurs.

## Description

La présente invention concerne un système et un procédé de contrôle qualité d'applications informatisées d'une grande entreprise.

L'invention s'applique plus particulièrement à l'interrogation des utilisateurs d'un ensemble d'applications informatisées mises à disposition dans une entreprise pour en détecter les dysfonctionnements, en mesurer les performances et l'adéquation par rapport aux besoins des utilisateurs.

Actuellement, les instituts de sondage définissent d'abord un questionnaire prédéterminé et spécifique au sujet à analyser. Ensuite, à partir du questionnaire prédéterminé, ceux-ci interrogent un échantillon d'utilisateurs concernés par le sujet à analyser. L'échantillon des utilisateurs doit également être représentatif des différents types d'utilisateurs (différentes tranches d'âge, différents niveaux sociaux, etc...). Le résultat obtenu par les réponses au questionnaire est une représentation à un instant donné de l'avis des utilisateurs sondés et des problèmes signalés. Cette représentation n'est valable uniquement que pour la période d'interrogation des utilisateurs. Les personnes sondées doivent répondre à un questionnaire figé dans sa totalité et de façon complète, toutes les questions et toutes les réponses possibles étant prédéfinies à l'avance.

De plus, comme l'échantillon des utilisateurs sondés est parfaitement contrôlé, les situations ou les phénomènes imprévus ou inattendus ont peu de chances d'être détectés. Enfin, l'interrogation des utilisateurs est souvent manuelle, soit lors d'un entretien physique, soit lors d'un entretien téléphonique. Par conséquent, le coût de ces sondages est en général très élevé du fait du nombre important de personnel nécessaire pour éviter une période d'interrogation trop longue et pour analyser rapidement les résultats. Malgré tout, un délai minimum incompressible existe entre le lancement du sondage et l'obtention des résultats. Ce délai, au minimum de plusieurs jours, est incompatible avec les besoins de gestion et de pilotage des applications informatisées exploitées dans une entreprise.

Par ailleurs, il existe actuellement des sondages réalisés sur des réseaux de communication, tel que le réseau Internet. Un questionnaire, également prédéterminé, est alors défini sous la forme de pages web. Ce questionnaire prédéterminé est mis en ligne sur un serveur web et accessible à tous les utilisateurs dudit réseau de communication pendant un temps déterminé. En comparaison avec le sondage précédent, ces sondages en ligne sont un moyen très économique, mais souvent sans contrôle sur les personnes qui répondent ainsi au sondage.

Au contraire du sondage manuel, ce sondage est une représentation dans le temps, au fur et à mesure de l'accès et des réponses des utilisateurs dudit réseau de communication. Par contre, l'émetteur du questionnaire ne contrôle pas l'échantillon des utilisateurs qui répondent. La plupart du temps, seuls les utilisateurs habilités du réseau de communication vont accéder audit sondage. Par conséquent, la représentativité des utilisateurs sondés n'est pas bonne, car il est difficile de mesurer la qualité et la pertinence de cette représentativité, ce qui crée une distorsion dans les résultats obtenus. Dans ce cas, le manque de contrôle de l'échantillon des utilisateurs ne permet pas l'utilisation de ces sondages en tant que système fiable de contrôle qualité des applications informatisées exploitées dans une entreprise.

Aussi le problème technique à résoudre par l'objet de la présente invention est de proposer un système et un procédé de contrôle qualité d'un ensemble d'applications informatisées d'une entreprise, qui permettrait de remédier aux inconvénients des systèmes existants en garantissant la représentativité des utilisateurs interrogés et en prenant en compte des situations prévisibles et imprévisibles pour la gestion des applications informatisées d'une grande entreprise.

La solution au problème technique posé consiste, selon la présente invention, en ce que ledit système comprend au moins un dispositif intégrateur apte à traiter au moins une donnée correspondant à chacun des utilisateurs desdites applications informatisées et à définir automatiquement au moins une table de références utilisateur pour relier toutes les données correspondant à chacun desdits utilisateurs, au moins un gestionnaire de questionnaires apte à gérer automatiquement toutes les questions et toutes les réponses correspondant auxdites applications informatisées de l'entreprise à contrôler, au moins un dispositif de calcul apte à calculer automatiquement au moins un indicateur de qualité et au moins un axe d'analyse à partir desdites réponses à au moins un questionnaire pour donner au moins un indice de satisfaction, au moins un entrepôt de données apte à analyser en dynamique les réponses définies directement par lesdits utilisateurs, au moins un moteur de catégorisation apte à attribuer automatiquement une signature de référence à chacune desdites questions ouvertes pour représenter une catégorie de réponse, au moins un moteur de modélisation apte à générer automatiquement au moins une variable explicative pour expliquer ledit indice de satisfaction des utilisateurs interrogés pour ladite application informatisée contrôlée.

De la même manière, ledit procédé de contrôle qualité d'un ensemble d'applications informatisées d'entreprise est remarquable en ce qu'il comporte les étapes consistant à : - mettre en mémoire par au moins un dispositif intégrateur dans une base de données au moins une donnée correspondant à chacun des utilisateurs desdites applications informatisées d'entreprise ; - traiter automatiquement lesdites données mémorisées pour les mettre en cohérence et définir au moins une table de références utilisateur dans ledit dispositif intégrateur ; - transmettre automatiquement vers lesdits utilisateurs au moins un questionnaire par au moins un gestionnaire de questionnaires ; - calculer automatiquement dans au moins un dispositif de calcul au moins un indicateur de qualité et au moins un axe d'analyse à partir des réponses audit questionnaire en fonction d'un ensemble de domaines sélectionnés par ladite entreprise ; - analyser en dynamique par au moins un entrepôt de données les réponses définies directement par lesdits utilisateurs ; - analyser automatiquement au moins une question ouverte par au moins un moteur de catégorisation pour attribuer une signature de référence à chacune desdites questions ouvertes ; - générer automatiquement au moins une variable explicative par au moins un moteur de modélisation pour expliquer au moins un indice de satisfaction des utilisateurs interrogés pour ladite application informatisée contrôlée.

Ainsi lesdits système et procédé de contrôle qualité, conformes à l'invention, permettent de transmettre automatiquement au moins un questionnaire aux utilisateurs d'au moins une application informatisée, exploitée dans une grande entreprise. Toutes les données, existantes dans différents équipements A, B, .., X de l'entreprise, sont sauvegardées par ledit système de contrôle qualité. Ces données permettent d'analyser les réponses reçues pour ledit questionnaire. Un indice de satisfaction, donné par les utilisateurs desdites applications informatisées, est calculé par le dispositif de calcul. Sont également réalisés une mise en forme et un classement des résultats par rapport à des indicateurs de qualité et des axes d'analyse. Un entrepôt de données permet la mise à disposition des résultats obtenus pour les utilisateurs. Des catégories de réponses sont attribuées par le moteur de catégorisation. Enfin, le moteur de modélisation génère des variables explicatives pour gérer les priorités des problèmes énoncés par les utilisateurs interrogés, que les problèmes soient prévisibles ou imprévisibles.

Toutes ces informations sont mises en mémoire dans au moins une base de données. Elles sont également accessibles par les utilisateurs sur un site interne du réseau de l'entreprise.

Selon l'invention, ledit questionnaire est transmis à une partie desdits utilisateurs des applications informatisées d'entreprise, sélectionnés automatiquement et aléatoirement par ledit dispositif intégrateur.

Selon l'invention, ledit questionnaire est évolutif pour s'adapter, séparément ou en combinaison, en fonction dudit utilisateur interrogé, de ladite application informatisée contrôlée, d'au moins une réponse donnée à une question précédente, de la fidélité dudit utilisateur interrogé.

Le dispositif intégrateur sélectionne automatiquement et de façon aléatoire, par tirage au sort, une partie desdits utilisateurs des applications informatisées de l'entreprise pour la transmission d'au moins un questionnaire. Tous les utilisateurs ne sont pas interrogés. A tour de rôle, une partie desdits utilisateurs est sollicitée par interrogations successives.

La liste des utilisateurs interrogés périodiquement, par exemple mensuellement, est définie de façon aléatoire dans ledit dispositif intégrateur et mise en mémoire dans la base de données. Cette liste peut comprendre de nouveaux utilisateurs à interroger et relancer des utilisateurs interrogés les mois précédents et qui n'ont pas répondu.

Le questionnaire est dynamique en fonction des utilisateurs et des applications sur lesquelles portent les réponses. Au contraire d'une liste figée de questions, le gestionnaire de questionnaires réalise et gère ledit questionnaire, ce qui permet d'individualiser le questionnaire en fonction de la personne qui y répond. Le choix des questions est également fait en fonction des applications informatisées de l'entreprise à contrôler. Le questionnaire est dynamique, évolutif et contextuel. Au fur et à mesure, celui-ci est adapté en fonction de la réponse donnée à une ou plusieurs questions précédentes. Il est également différent si la personne répond au questionnaire pour la première fois ou non.

Conformément à l'invention, l'anonymat des utilisateurs interrogés à partir dudit questionnaire est garanti.

Les utilisateurs étant sélectionnés automatiquement et de façon aléatoire par ledit dispositif intégrateur, ils peuvent rester anonymes au moment de la réponse au questionnaire. La mise en mémoire dans la base de données des réponses au questionnaire est réalisée par une transmission sécurisée, qui garantie cet anonymat et la sécurité des données.

De même, lors du traitement des questions ouvertes et de leurs réponses, des messages peuvent être transmis automatiquement vers les responsables des applications contrôlées pour prise en compte desdites réponses. Cette transmission peut être réalisée par ledit système de contrôle qualité en préservant l'anonymat des utilisateurs interrogés à partir dudit questionnaire, sans notification du nom de l'utilisateur interrogé.

Selon l'invention, les réponses audit questionnaire sont traitées, mises en forme, mises à disposition en quasi temps réel pour lesdits utilisateurs de l'entreprise et mises en mémoire dans ladite base de données.

Ledit dispositif de calcul et ledit entrepôt de données traitent les réponses au questionnaire, calculent des indicateurs de qualité et des axes d'analyse en fonction de domaines sélectionnés par l'entreprise pour permettre de déterminer un indice de satisfaction pour les applications informatisées contrôlées.

Les résultats sont ainsi préparés pour permettre de donner en quasi temps réel le résultat des analyses en dynamique et de donner un accès quasi instantané sur la qualité des applications informatisées de l'entreprise.

Conformément à l'invention, ledit moteur de modélisation regroupe des données mémorisées non reliées directement auxdites applications informatisées d'entreprises et audit questionnaire pour rechercher lesdites variables explicatives.

Un des avantages dudit système de contrôle qualité est de recevoir des données sur les utilisateurs, sur les applications informatisées, sur l'organisation de l'entreprise, etc... et de les regrouper entre elles afin d'analyser les résultats avec plus de pertinence, d'expliquer les indices de satisfaction et de permettre de prendre des décisions par rapport aux résultats. Les résultats sont transmis aux responsables de l'entreprise avec des propositions pour des actions et des décisions à prendre.

La description qui va suivre en regard du dessin annexé, donné à titre d'exemple non limitatif, fera bien comprendre en quoi consiste l'invention et comment elle peut être réalisée.

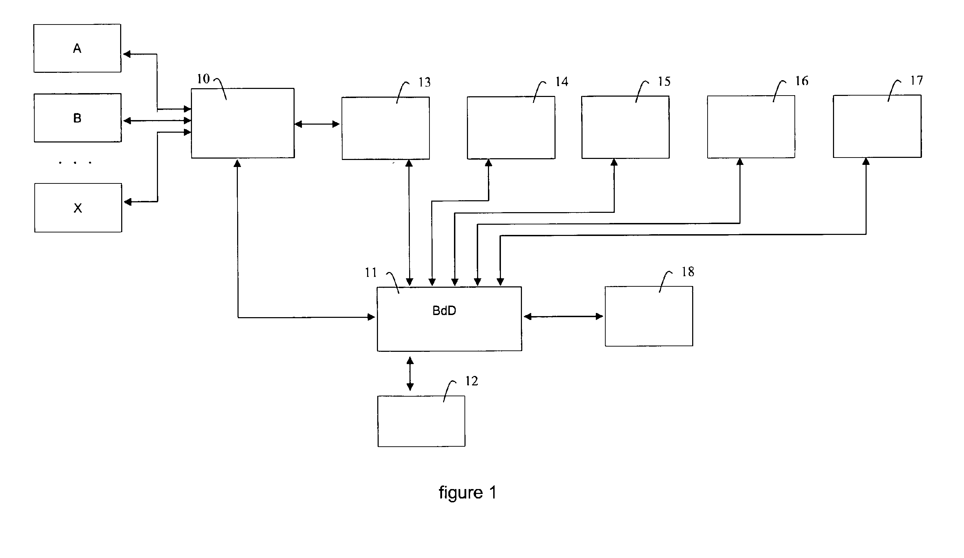

La figure 1 représente l'architecture générale d'un système de contrôle qualité d'un ensemble d'applications informatisées d'entreprise, conforme à l'invention.

Un système de contrôle qualité d'un ensemble d'applications informatisées d'entreprise, conforme à l'invention, comprend au moins un dispositif intégrateur 10, au moins un gestionnaire 13 de questionnaires, au moins un dispositif 14 de calcul, au moins un entrepôt 15 de données, au moins un moteur 16 de catégorisation et au moins un moteur 17 de modélisation, ledit système étant représenté en figure 1.

Il comprend également au moins une base 11 de données pour mettre en mémoire toutes les données nécessaires au fonctionnement dudit système. Ladite base 11 de données peut être physiquement incluse ou non audit système de contrôle qualité.

Ledit système peut également comprendre au moins un dispositif 12 d'interrogations, qui établit les communications nécessaires entre le système, conforme à l'invention, et les utilisateurs de l'entreprise. Au moins un dispositif 12 d'interrogations est équipé d'au moins un moyen de transmission pour communiquer entre les utilisateurs de l'entreprise et ledit système de contrôle qualité. Ledit dispositif 12 d'interrogations peut être physiquement inclus dans ledit système de contrôle qualité. Mais, un ou plusieurs dispositifs 12 d'interrogations, externes audit système, peuvent être commandés par le dispositif intégrateur 10, s'il existe déjà un ou de tels dispositifs dans l'entreprise. Ledit dispositif 12 d'interrogations peut également être ou non physiquement inclus dans le dispositif intégrateur 10.

Un système d'information d'entreprise (ou SI) est l'ensemble des équipements et applications qui contribuent au traitement et à la gestion de l'information dans l'entreprise (bases de données, logiciels d'application, etc...), y compris le système informatique proprement dit, en particulier l'ensemble des applications informatisées de l'entreprise.

Le dispositif intégrateur 10 reçoit et met en mémoire dans ladite base 11 de données au moins une donnée correspondant à chacun des utilisateurs desdites applications informatisées de l'entreprise. Ledit dispositif intégrateur 10 gère l'ensemble des données concernant les utilisateurs du Sl interrogés. Ces données sont transmises par différents équipements A, B, ..., X, de l'entreprise, en particulier les systèmes de gestion des Ressources Humaines (RH), les annuaires du personnel de l'entreprise, les annuaires de messagerie électronique, les organigrammes de l'entreprise avec les différentes entités et les fonctions existantes dans ces entités, la liste des référentiels correspondant aux métiers et aux postes de travail de l'entreprises, etc...

Le dispositif intégrateur 10 prend en compte des organisations de toute nature, quel que soit le domaine d'activité de l'entreprise et quelque soit la nature des équipements A, B, ..., X propres à chaque entreprise. Il s'adapte aux évolutions dans le temps de ladite organisation d'entreprise. En particulier, il gère les organisations de façon récursive, c'est-à-dire en tenant compte qu'une personne fait partie d'un service S1, service S1 qui est lui-même inclus dans un autre service S2, service S2 qui est intégré à une entité, ... et ainsi de suite en répétant les niveaux un nombre indéfini de fois.

Ledit dispositif intégrateur 10 reçoit également la liste des applications informatisées qui sont mises à disposition du personnel de l'entreprise, ainsi que la fonction de ces applications et les métiers ou postes de travail pour lesquelles elles sont destinées. Ces applications informatisées peuvent être de toute nature, quelle soient standards et très connues ou bien quelles soient spécifiques et très particulières surtout dans une grande entreprise. Ces applications peuvent être indifféremment utilisées par une grande partie du personnel de l'entreprise ou par peu de personnes.

La liste inclut également l'indication des maîtres d'ouvrage (MOA) et des maîtres d'oeuvre (MOE) qui gèrent chacune de ces applications informatisées, aussi bien pour la maintenance que pour les évolutions de celles-ci. Cette liste peut comprendre toutes informations liées à ces applications, telles que l'existence d'un manuel utilisateur, l'accès possible à une aide en ligne, la mise en place d'une ligne directe ou "hot-line" pour la maintenance, le nombre de personnes pouvant identifier des pannes sur une application, etc... Enfin, la liste recense les informations techniques d'accès et de gestion des utilisateurs pour ces applications informatisées, tels que les adresses IP (Internet Protocol, soit protocole internet) sur le réseau interne de l'entreprise, les équipements proxy utilisés, les informations existantes dans les entêtes HTTP (Hyper Text Transfer Protocol, soit protocole de transfert hypertexte) pour les messages transmis, etc...

Ledit dispositif intégrateur 10 peut recevoir automatiquement toutes lesdites données, par exemple grâce à des routines de transmission existant entre le dispositif intégrateur 10 et les équipements A, B, ..., X. Il peut également interroger automatiquement et périodiquement ou bien en temps réel les différents équipements A, B, ..., X, par exemple pour des mises à jour régulières. Le dispositif intégrateur 10 est configuré pour transmettre vers lesdits équipements A, B, ..., X de l'entreprise de manière à recevoir les données de ladite entreprise. Le dispositif intégrateur 10 est équipé des différentes interfaces de communication (émission et réception) avec les divers équipements A, B, ..., X de l'entreprise pour communiquer et transmettre lesdites données.

Ladite base 11 de données permet la sauvegarde de toutes les données reçues. Elle peut être ou non physiquement incluse audit dispositif intégrateur 10. Le dispositif intégrateur 10 est configuré pour transmettre et pour mettre en mémoire lesdites données vers ladite base 11 de données.

Le dispositif intégrateur 10 traite automatiquement lesdites données mémorisées pour les mettre en cohérence et définir une table de références utilisateur. Il réalise les rapprochements logiques entre des données qui ont un lien non explicite entre elles pour un même utilisateur. Par exemple, une adresse de messagerie est liée aux informations RH de la même personne. Pour chaque utilisateur, une table de références rassemble toutes les données reçues propre à cet utilisateur, afin d'obtenir une représentation la plus exacte possible et la plus large possible de la population et des applications informatisées à contrôler. Le dispositif intégrateur 10 définit donc automatiquement lesdites tables de références utilisateur pour relier toutes les données correspondant à chacun desdits utilisateurs des applications informatisées de l'entreprise. Après la mise en cohérence, lesdites tables de références utilisateur sont également mises en mémoire dans la base 11 de données.

Le dispositif intégrateur 10 comprend au moins un séquenceur, qui commande les actions à entreprendre par les autres équipements dudit système aux moments appropriés. Pour ce faire, ledit dispositif intégrateur sollicite chacun des différents équipements qui composent ledit système de contrôle qualité, conforme à l'invention.

Parmi les données mémorisées, ledit dispositif intégrateur 10 sélectionne ensuite automatiquement et de façon aléatoire, par tirage au sort, une partie desdits utilisateurs des applications informatisées de l'entreprise pour la transmission d'au moins un questionnaire. Tous les utilisateurs ne sont pas interrogés. A tour de rôle, une partie desdits utilisateurs est sollicitée par interrogations successives.

La liste desdits utilisateurs sélectionnés est transmise par le dispositif intégrateur 10 vers au moins un gestionnaire 13 de questionnaires. Le dispositif intégrateur 10 est configuré pour dialoguer avec ledit gestionnaire 13 de questionnaires. Les utilisateurs à interroger reçoivent un questionnaire à remplir, en général ils reçoivent l'adresse d'un lien pour accéder audit questionnaire en ligne sur un serveur interne à l'entreprise. Ledit gestionnaire 13 de questionnaires transmet automatiquement ledit questionnaire vers les utilisateurs sélectionnés de l'entreprise, par l'intermédiaire dudit dispositif 12 d'interrogations.

Le gestionnaire 13 de questionnaire assure la communication entre ledit système de contrôle qualité et les utilisateurs de l'entreprise à interroger. Il permet l'émission automatique de messages vers les utilisateurs au moyen de messages électroniques (ou e-mail) et/ou de télécopie, tel que par exemple un générateur automatique de e-mail.

Le questionnaire est dynamique en fonction des utilisateurs et des applications sur lesquelles portent les réponses. Au contraire d'une liste figée de questions, le gestionnaire 13 de questionnaires réalise et gère ledit questionnaire de la même façon que les systèmes utilisés en général pour le commerce électronique, par exemple les systèmes de transaction d'authentification, ce qui permet d'individualiser le questionnaire en fonction de la personne qui y répond. Le choix des questions est fait en fonction des applications informatisées de l'entreprise que l'utilisateur mentionne.

De plus, le questionnaire est dynamique, évolutif et contextuel. Au fur et à mesure, celui-ci est adapté en fonction de la réponse donnée à une ou plusieurs questions précédentes. Il est également différent si la personne répond au questionnaire pour la première fois ou non. Pour fidéliser un utilisateur, ledit questionnaire reconnaît un utilisateur déjà interrogé et personnalise ledit questionnaire en fonction de la fidélité dudit utilisateur. Par conséquent, ledit questionnaire est évolutif pour s'adapter en fonction de l'utilisateur interrogé, et/ou en fonction de l'application informatisée contrôlée, et/ou en fonction d'au moins une réponse donnée à une question précédente, et/ou en fonction de la fidélité dudit utilisateur interrogé. La totalité des réponses au questionnaire est automatiquement mise en mémoire dans ladite base 11 de données.

Un des avantages dudit système de contrôle qualité est la possibilité de transmettre un questionnaire à un nombre important d'utilisateurs. Par exemple, pour une grande entreprise composée d'environ 100 000 personnes, un questionnaire d'environ 80 questions peut être transmis mensuellement à 20 000 utilisateurs pour un coût faible limité à un utilisateur de l'infrastructure réseau de l'entreprise.

La liste des utilisateurs interrogés périodiquement, par exemple mensuellement, est définie de façon aléatoire dans ledit dispositif intégrateur 10 parmi la liste des tables de références utilisateur, qui est en mémoire dans la base 11 de données. Cette liste peut comprendre de nouveaux utilisateurs à interroger et relancer des utilisateurs interrogés les mois précédents et qui n'ont pas répondu.

Ledit traitement d'un nombre important de réponses est réalisé dans un délai très court. Cet avantage est possible grâce aux technologies utilisées pour le questionnaire qui inclut des fonctions habituellement mises en oeuvre par un serveur. Ceci permet de multiplier la puissance du gestionnaire 13 de questionnaires par le nombre des terminaux des utilisateurs interrogés en déportant les traitements sur les terminaux des utilisateurs. Par exemple, l'aide aux différents choix, ainsi que des paramètres est déportée sur le terminal dudit utilisateur. Cette caractéristique technique permet de diminuer de façon importante la charge du gestionnaire 13 de questionnaire, qui gère ledit questionnaire.

En plus du caractère dynamique et évolutif, le questionnaire comporte des questions ouvertes, ou verbatims, pour lesquelles la réponse se fait en texte libre non limité en taille, en dehors des questions dites fermées, qui comporte un nombre limité et prédéfinis de choix de réponses. Par conséquent, ledit gestionnaire 13 de questionnaires est apte à gérer automatiquement toutes les questions et toutes les réponses correspondant auxdites applications informatisées de l'entreprise à contrôler.

Enfin, les utilisateurs étant sélectionnés automatiquement et de façon aléatoire par ledit dispositif intégrateur 10, ils peuvent rester anonymes au moment de la réponse au questionnaire. La mise en mémoire dans la base 11 de données des réponses au questionnaire est réalisée par une transmission sécurisée, qui garantie cet anonymat et la sécurité des données. Ledit système de contrôle qualité garantie l'anonymat des utilisateurs interrogés à partir du questionnaire. De façon générale, ledit gestionnaire 13 de questionnaires est configuré pour dialoguer avec ledit dispositif intégrateur 10, pour dialoguer et commander ledit dispositif 12 d'interrogations, pour transmettre et pour mettre en mémoire lesdites données vers ladite base 11 de données.

De plus, les réponses au questionnaire sont automatiquement accessibles sur un serveur du réseau interne de l'entreprise, par exemple un site web intranet, qui reçoit les informations en provenance de la base 11 de données et à partir des résultats des calculs effectués périodiquement par un dispositif 14 de calcul.

Au moins un dispositif 14 de calcul reçoit les réponses aux différentes questions dudit questionnaire en provenance dudit gestionnaire 13 de questionnaires. Ledit gestionnaire 13 de questionnaires est configuré pour dialoguer et transmettre vers ledit dispositif 14 de calcul. Il calcule automatiquement des indicateurs de qualité et des axes d'analyse à partir des réponses au questionnaire et en fonction d'un ensemble de domaines sélectionnés par l'entreprise pour donner au moins un indice de satisfaction. Les indicateurs de qualité permettent de quantifier la valeur d'une réponse, par exemple en fonction du métier de l'utilisateur ou de l'organisation à laquelle il appartient ou de toute autre caractéristique personnelle le concernant. Les axes d'analyse permettent de classer les réponses en fonction de domaines. Le choix des domaines est sélectionné par l'entreprise, par exemple, une application informatisée, l'organisation dans l'entreprise, le niveau hiérarchique de l'utilisateur interrogé, l'architecture du réseau utilisé, la nature du poste de travail de l'utilisateur, etc... En particulier, ledit dispositif 14 de calcul peut être mis en oeuvre à partir d'un système workflow (flux de travail pour le contrôle automatisé de l'enchaînement ordonné des tâches successives) sur un serveur SQL (Structure Query Language, soit langage de requête structurée).

Le dispositif 14 de calcul réalise et met en forme les résultats obtenus à partir dudit questionnaire sous la forme de fichiers bureautiques standards (format Word, Excel ou Access par exemple), de manière à pouvoir les exploiter plus facilement en fonction des indicateurs de qualité et des axes d'analyse. Lesdits résultats permettent le calcul d'au moins un indice de satisfaction par application contrôlée et la liste des dysfonctionnements détectés. Les fichiers bureautiques et les indices de satisfaction sont également accessibles sur le réseau interne de l'entreprise, accessible automatiquement en temps réel. Tous les calculs réalisés sont mis en mémoire dans ladite base 11 de données. De façon générale, le dispositif 14 de calcul est configuré pour dialoguer et transmettre avec ledit gestionnaire 13 de questionnaires, au moins un entrepôt 15 de données et ledit dispositif intégrateur 10, pour transmettre et pour mettre en mémoire vers ladite base 11 de données.

Les analyses de qualité pouvant être complexes, les résultats transmis par le dispositif 14 de calcul sont complétés par un entrepôt 15 de données (ou Data Warehouse). Il centralise les résultats obtenus à partir dudit questionnaire et les intègre avec différentes sources de renseignements de l'entreprise (RH, annuaires, maintenance, équipements réseau, etc...), de façon à regrouper et associer des données pour réaliser des agrégats facilitant le pilotage et le suivi des indicateurs de qualités des différentes activités de l'entreprise. Ledit entrepôt 15 de données analyse en dynamique les réponses définies directement par lesdits utilisateurs dudit système de contrôle qualité et permet la mise à disposition des résultats obtenus pour les utilisateurs.

Les résultats sont ainsi préparés pour permettre de donner en quasi temps réel le résultat des analyses en dynamique et de donner un accès quasi instantané sur la qualité des applications informatisées de l'entreprise, en particulier en traitant les différents niveaux de qualité par rapport aux axes d'analyse. Notamment, l'entrepôt 15 de données permet de visualiser les résultats et de les explorer en partant du général et en allant vers le particulier, de façon de plus en plus détaillée. Tous les traitements réalisés sont également mis en mémoire dans ladite base 11 de données.

Ensuite, un traitement particulier est réalisé pour les réponses aux questions ouvertes (ou verbatims), analysées précédemment par le dispositif 14 de calcul et l'entrepôt 15 de données. Lesdites questions ouvertes et leurs réponses sont transmises automatiquement vers les responsables des applications contrôlées pour prise en compte desdites réponses. Cette transmission peut être réalisée en préservant si nécessaire l'anonymat des utilisateurs interrogés à partir dudit questionnaire, par exemple par un message électronique (ou e-mail) à partir dudit dispositif 12 d'interrogations du système de contrôle qualité sans notification du nom de l'utilisateur interrogé.

Cette prise en compte peut être des évolutions fonctionnelles de l'application contrôlée, à réaliser par le maître d'ouvrage (MOA) gérant l'application informatisée, ou bien des actions de maintenance à réaliser par le maître d'oeuvre (MOE). La maintenance ou les évolutions proposées par les MOA et MOE sont automatiquement re-transmises vers les utilisateurs interrogés, qui sont concernés. Ces échanges de messages sont également mis en mémoire dans ladite base 11 de données pour relance et supervision par ledit système de contrôle qualité.

Par conséquent, ledit entrepôt 15 de données est configuré pour dialoguer et transmettre avec ledit dispositif 14 de calcul, au moins un moteur 16 de catégorisation et ledit dispositif intégrateur 10, transmettre et pour mettre en mémoire vers ladite base 11 de données.

Les réponses aux questions ouvertes (ou verbatims) sont analysées à l'aide d'un moteur 16 de catégorisation entièrement automatisé. Il construit une base de connaissance par apprentissage automatique à partir du contenu des réponses en texte libre, en tenant compte du langage réel des utilisateurs. Ledit moteur 16 de catégorisation attribue une signature de référence à chaque réponse à une question ouverte. Chaque réponse possède une signature de référence dans ladite base de connaissance, qui représente une catégorie de réponse. Ensuite, le moteur 16 de catégorisation calcule une signature de référence pour chaque nouvelle réponse reçue et la compare aux signatures de référence déjà existantes. Lesdites signatures de référence et la catégorisation des réponses sont mises en mémoire dans ladite base 11 de données.

Le moteur 16 de catégorisation est configuré pour dialoguer et transmettre avec ledit entrepôt 15 de données, au moins un moteur 17 de modélisation et ledit dispositif intégrateur 10, pour dialoguer et commander ledit dispositif 12 d'interrogations, pour transmettre et pour mettre en mémoire vers ladite base 11 de données. Ledit moteur 16 de catégorisation analyse automatiquement au moins une question ouverte pour attribuer une signature de référence à chacune desdites questions ouvertes, pour représenter une catégorie de réponse.

Cette catégorisation des réponses aux questions ouvertes permet des classements et des interrogations simples et rapides sur ledit système de contrôle qualité, par exemple obtenir la liste des modifications les plus demandées pour une application donnée.

Enfin, un moteur 17 de modélisation permet de construire automatiquement au moins un modèle prédictif de comportement ou de phénomènes. Ledit modèle génère automatiquement des variables explicatives à partir de l'ensemble des données mises en mémoire dans ledit système de contrôle qualité, tel que les réponses au sondage, les données personnelles correspondant aux utilisateurs, les tables de références utilisateur, la nature des postes de travail utilisés par lesdits utilisateurs, l'organisation de l'entreprise, le traitement des questions ouvertes, etc...

L'objectif du moteur 17 de modélisation est d'expliquer la valeur finale de l'indice de satisfaction pour un jour donné et pour une application contrôlée, indice trouvé à partir des réponses au questionnaire. Il permet également d'expliquer une variation dudit indice par rapport à un sondage précédent existant. La valeur de l'indice de satisfaction donne une mesure moyenne de la satisfaction des utilisateurs interrogés. Les variables explicatives fournies par ledit moteur 17 de modélisation permettent de connaître les facteurs de satisfaction ou d'insatisfaction, qui explique ladite valeur de l'indice de satisfaction. La valeur de l'indice de satisfaction prend en compte les réponses directes au questionnaire, tel que le temps de réponse pour l'accès à une application contrôlée. Ces informations sont exclues des recherches pour les facteurs de satisfaction ou d'insatisfaction.

Le moteur 17 de modélisation permet de formuler une explication à partir des résultats du sondage et des dysfonctionnements détectés. A partir de résultats bruts, il peut lier entre elles des données, mémorisées sans lien au préalable, de manière à rechercher et extraire des variables. Ces variables sont mises en évidence parmi la quantité très importante desdites données mémorisées dans la base 11 de données. Lesdites variables explicatives sont des éléments factuels non directement reliés à l'application informatisée, tels que l'activité de l'utilisateur qui a répondu, la localisation géographique de l'utilisateur, l'existence d'un guide utilisateur concernant l'application contrôlée, etc... Lesdites variables explicatives sont mises en mémoire dans ladite base 11 de données.

Grâce au moteur 17 de modélisation, qui réalise un modèle de comportement en fonction des utilisateurs ciblés, le résultat n'est pas fourni sans explication. Ledit moteur 17 de modélisation génère des variables explicatives pour gérer les priorités des problèmes énoncés par les utilisateurs interrogés, que les problèmes soient prévisibles ou imprévisibles. En plus des dysfonctionnements signalés, sont fournies des informations permettant de prendre des décisions par rapport audit résultat. Le classement des réponses par domaine, précédemment réalisé, permet de reconnaître des dysfonctionnements propres à l'application contrôlée.

Le moteur 17 de modélisation génère donc automatiquement au moins une variable explicative pour expliquer au moins un indice de satisfaction des utilisateurs interrogés pour une application informatisée contrôlée. Il est configuré pour dialoguer et transmettre vers ledit moteur 16 de catégorisation et ledit dispositif intégrateur 10, pour transmettre et pour mettre en mémoire vers ladite base 11 de données.

En plus, ledit moteur 17 de modélisation, en utilisant les données très larges mises en mémoire, permet de distinguer des phénomènes non prévus ou inattendus. Ces phénomènes sont alors reliés à d'autres données que celles de l'application contrôlée et des réponses au questionnaire, telles que des caractéristiques techniques du réseau en fonction de la localisation géographique ou bien des problèmes de gestion du personnel ou RH. Les résultats sont alors transmis aux responsables de l'entreprise avec des propositions pour des actions et des décisions. Le moteur 17 de modélisation regroupe des données mémorisées non reliées directement auxdites applications informatisées d'entreprises et audit questionnaire pour rechercher lesdites variables explicatives.

Une fois que des variables explicatives ont été extraites, ledit modèle est détruit, puisqu'il ne correspond qu'à une situation donnée avec des réponses données au questionnaire et des dysfonctionnements signalés à ce moment là.

Pour des besoins de pilotage à court terme, par exemple une journée, le moteur 17 de modélisation va créer un modèle pour les réponses du jour, puis des jours précédents, puis du mois précédent. Si une variable est confirmée, c'est le signe d'un fait marquant, d'un phénomène nouveau ou bien d'un problème non résolu.

Un Programme d'ordinateur, comprenant des portions de code, est prévu pour l'exécution des différentes étapes du procédé tel que défini précédemment, ainsi qu'un support d'enregistrement lisible par un ordinateur sur lequel est enregistré ledit programme d'ordinateur.

Au moins un administrateur 18 de données peut être prévu dans ledit système de contrôle qualité pour permettre une commande manuelle, si nécessaire, et gérer les données référentielles. Ledit administrateur 18 de données permet d'entrer des décisions d'interrogations ou de contrôle, par exemple le choix d'interroger une entité dans l'organisation de l'entreprise. L'administrateur 18 de données peut accéder à la liste des utilisateurs sélectionnés pour le sondage par l'intermédiaire du dispositif intégrateur 10. Il peut ajouter une nouvelle application informatisée à contrôler, dans le cas d'une nouvelle mise en service dans l'entreprise. Il peut modifier une caractéristique pour les utilisateurs sélectionnés ou bien ajouter une entité à interroger dans l'organisation de l'entreprise. Il peut réaliser des relances particulières vers des responsables de l'entreprise pour connaître leur avis par l'intermédiaire du dispositif 12 d'interrogations.

Ledit administrateur 18 de données peut également accéder au dispositif 14 de calcul pour ajouter des domaines de classement. Il peut également accéder au moteur 16 de catégorisation pour ajouter de nouvelles catégories ou bien corriger d'éventuelles erreurs de classement dudit moteur 16 de catégorisation en permettant d'améliorer ladite base de connaissance par apprentissage.

L'administrateur 18 de données commande donc l'ajout ou le retrait, séparément ou en combinaison, d'au moins un utilisateur à interroger, d'au moins une application informatisée d'entreprise à contrôler, d'au moins un domaine sélectionné pour ledit dispositif 14 de calcul, d'au moins une signature de référence pour ledit moteur 16 de catégorisation. Il peut commander, séparément ou en combinaison, ledit dispositif intégrateur 10, ladite base 11 de données, ledit dispositif 12 d'interrogations, ledit gestionnaire 13 de questionnaires, ledit dispositif 14 de calcul, ledit entrepôt 15 de données, ledit moteur 16 de catégorisation, ledit moteur 17 de modélisation.

## Revendications

1. Procédé de contrôle qualité d'un ensemble d'applications informatisées d'entreprise, **caractérisé en ce que** ledit procédé comporte les étapes consistant à :
- mettre en mémoire et traiter automatiquement dans au moins un dispositif intégrateur (10) au moins une donnée pour définir au moins une table de références utilisateur desdites applications informatisées d'entreprise,
- transmettre automatiquement vers lesdits utilisateurs au moins un questionnaire par au moins un gestionnaire (13) de questionnaires,
- analyser et calculer automatiquement dans au moins un dispositif (14) de calcul et au moins un entrepôt (15) de données au moins un indice de satisfaction et un classement des résultats en fonction d'un ensemble de domaines sélectionnés par ladite entreprise,
- analyser automatiquement au moins une question ouverte par au moins un moteur (16) de catégorisation pour attribuer une catégorie de réponse pour classement,
- générer automatiquement au moins une variable explicative par au moins un moteur (17) de modélisation à partir de l'ensemble des données mises en mémoire pour expliquer ledit indice de satisfaction.

2. Procédé de contrôle qualité selon la revendication 1, **caractérisé en ce que** ledit questionnaire est transmis à une partie desdits utilisateurs des applications informatisées d'entreprise, sélectionnés automatiquement et aléatoirement par ledit dispositif intégrateur (10).

3. Procédé de contrôle qualité selon l'une des revendications 1 ou 2, **caractérisé en ce que** ledit questionnaire est évolutif pour s'adapter, séparément ou en combinaison, en fonction dudit utilisateur interrogé, de ladite application informatisée contrôlée, d'au moins une réponse donnée à une question précédente, de la fidélité dudit utilisateur interrogé.

4. Procédé de contrôle qualité selon l'une quelconque des revendications 1 à 3, **caractérisé en ce que** l'anonymat des utilisateurs interrogés à partir dudit questionnaire est garanti.

5. Procédé de contrôle qualité selon l'une quelconque des revendications 1 à 4, **caractérisé en ce** ledit moteur (17) de modélisation regroupe des données mémorisées non reliées directement auxdites applications informatisées d'entreprises et audit questionnaire pour rechercher lesdites variables explicatives.

6. Système de contrôle qualité d'un ensemble d'applications informatisées d'entreprise, **caractérisé en ce qu'**il comprend au moins un dispositif intégrateur (10) apte à traiter automatiquement au moins une donnée pour définir au moins une table de références utilisateur pour relier toutes les données correspondant à chacun desdits utilisateurs, au moins un gestionnaire (13) de questionnaires apte à gérer automatiquement toutes les questions et toutes les réponses correspondant auxdites applications informatisées de l'entreprise à contrôler, au moins un dispositif (14) de calcul apte à calculer automatiquement au moins un indice de satisfaction, au moins un entrepôt (15) de données apte à analyser en dynamique les réponses définies directement par lesdits utilisateurs, au moins un moteur (16) de catégorisation apte à attribuer automatiquement une signature de référence à chacune desdites questions ouvertes pour représenter une catégorie de réponse, au moins un moteur (17) de modélisation apte à générer automatiquement au moins une variable explicative pour expliquer ledit indice de satisfaction des utilisateurs interrogés pour ladite application informatisée contrôlée.

7. Dispositif intégrateur (10) apte à être mis en oeuvre dans un système conforme à la revendication 6, **caractérisé en ce qu'**il est configuré pour transmettre vers au moins un équipement A, B, ..., X de l'entreprise pour recevoir des données de ladite entreprise, pour transmettre et pour mettre en mémoire vers ladite base (11) de données et pour dialoguer avec ledit gestionnaire (13) de questionnaires.

8. Gestionnaire (13) de questionnaires apte à être mis en oeuvre dans un système conforme à la revendication 6, **caractérisé en ce qu'**il est configuré pour dialoguer avec ledit dispositif intégrateur (10), pour dialoguer et commander ledit dispositif (12) d'interrogations, pour dialoguer et transmettre vers ledit dispositif (14) de calcul, pour transmettre et pour mettre en mémoire vers au moins une base (11) de données.

9. Dispositif (14) de calcul apte à être mis en oeuvre dans un système conforme à la revendication 6, **caractérisé en ce qu'**il est configuré pour dialoguer et transmettre avec ledit gestionnaire (13) de questionnaires, ledit entrepôt (15) de données et ledit dispositif intégrateur (10), pour transmettre et pour mettre en mémoire vers ladite base (11) de données.

10. Entrepôt (15) de données apte à être mis en oeuvre dans un système conforme à la revendication 6, **caractérisé en ce qu'**il est configuré pour dialoguer et transmettre avec ledit dispositif (14) de calcul, ledit moteur (16) de catégorisation et ledit dispositif intégrateur (10), transmettre et pour mettre en mémoire vers ladite base (11) de données.

11. Moteur (16) de catégorisation apte à être mis en oeuvre dans un système conforme à la revendication 6, **caractérisé en ce qu'**il est configuré pour dialoguer et transmettre avec ledit entrepôt (15) de données, ledit moteur (17) de modélisation et ledit dispositif intégrateur (10), pour dialoguer et commander ledit dispositif (12) d'interrogations, pour transmettre et pour mettre en mémoire vers ladite base (11) de données.

12. Moteur (17) de modélisation apte à être mis en oeuvre dans un système conforme à la revendication 6, **caractérisé en ce qu'**il est configuré pour dialoguer et transmettre vers ledit moteur (16) de catégorisation et ledit dispositif intégrateur (10), pour transmettre et pour mettre en mémoire vers ladite base (11) de données.

13. Programme d'ordinateur **caractérisé en ce qu'**il comprend des portions de code pour l'exécution des étapes du procédé selon les revendications 1 à 5.

14. Support d'enregistrement lisible par un ordinateur sur lequel est enregistré ledit programme d'ordinateur selon la revendication 13.
